# EUROPÄISCHE PATENTSCHRIFT

(11) **EP 2 269 770 B1**
(45) Veröffentlichungstag und Bekanntmachung des Hinweises auf die Patenterteilung: **14.03.2012**
(21) Anmeldenummer: 10168367.0
(22) Anmeldetag: 02.07.2010
(51) Int. Cl.: B23Q 3/155, B23Q 7/04, B23B 31/00

(54) **Verfahren und Werkzeugmaschine zum zerspanenden Bearbeiten eines Werkstücks**
Machine tool and method for machining a workpiece
Procédé et machine-outil destinés au traitement par enlèvement d'une pièce usinée

(30) Priorität: 03.07.2009 DE 102009027463
(43) Veröffentlichungstag der Anmeldung: 05.01.2011
(73) Patentinhaber: DECKEL MAHO Pfronten GmbH, 87459 Pfronten (DE)
(72) Erfinder: Neumaier, Josef, 87459 Pfronten (DE); Lochbihler, Thomas, 6682 Vils (AT); Hansen, Uwe-Carsten, 87637 Eisenberg (DE)
(74) Vertreter: MERH-IP Matias Erny Reichl Hoffmann

(56) Entgegenhaltungen:
- US-A- 4 644 635
- US-A1- 2007 182 109

## Beschreibung

Die vorliegende Erfindung betrifft ein Verfahren und eine Werkzeugmaschine, insbesondere eine Universal-Fräsmaschine oder ein Bearbeitungszentrum, zum programgesteuerten, zerspanenden Bearbeiten eines Werkstücks an einer zumindest 5 Achsen umfassenden Werkzeugmaschine mit einem Werkzeug, wobei die Werkzeugmaschine ein Einspannmittel zum Einspannen eines Werkstücks und eine Arbeitsspindel mit einem Werkzeugaufnahmemittel zum Aufnehmen eines Werkzeugs umfasst, insbesondere ein Werkzeugaufnahmemittel zum Aufnehmen eines Werkzeugkegels wie z.B. eines Morsekegels, Steilkegels oder Hohlschaftkegels.

Insbesondere betrifft die vorliegende Erfindung ein Verfahren und eine Werkzeugmaschine zum programmgesteuerten Bearbeiten eines Werkstücks mittels eines anhand von Steuerdaten bzw. eines NC-Programms gesteuerten Werkzeugs durch Zerspanen, wobei die Werkzeugmaschine zumindest 5 simultan ansteuerbare Achsen, ein Einspannmittel zum Einspannen des Werkstücks und eine Steuervorrichtung mit einer Arbeitsspindel, die ein Werkzeugaufnahmemittel zum Aufnehmen eines Werkzeugs aufweist, umfasst, wobei insbesondere die Steuervorrichtung der Werkzeugmaschine dazu geeignet ist, das in dem Werkzeugaufnahmemittel aufgenommene Werkzeug anhand der Steuerdaten entlang einer Werkzeugbahn zum Abtragen von Material von dem in dem Einspannmittel eingespannten Werkstück zu steuern.

Die vorliegende Erfindung betrifft insbesondere Verfahren zum Bearbeiten eines Werkstücks an einer Werkzeugmaschine und eine entsprechende Werkzeugmaschine, die zum fräsenden und/oder bohrenden Bearbeiten eines Werkstücks mittels eines Fräs- bzw. Bohrwerkzeugs geeignet ist, das an der Arbeitsspindel bzw. Hauptspindel der Werkzeugmaschine an einem Werkzeugaufnahmemittel eingespannt bzw. aufgenommen ist. Insbesondere betrifft die vorliegende Erfindung z.B. 5-Achs-Fräsmaschinen, 5-Achs-Fräs/Bohr-Werkzeugmaschinen, 5-Achs-Fräs/Dreh-Werkzeugmaschinen und Universal-Fräsmaschinen und Bearbeitungszentren mit 5 oder mehr simultan ansteuerbaren Achsen. Der Antrieb der Arbeits- bzw. Hauptspindel ist bei derartigen die Erfindung betreffenden Werkzeugmaschinen zum rotatorischen Antrieb des Werkzeugs vorgesehen, so dass die Schnittbewegung durch Antrieb des Werkzeugs erfolgt. Die Erfindung betreffende Werkzeugmaschinen sind von konventionellen Drehmaschinen zu unterscheiden.

US 4644635 zeigt eine Werkzeugmaschine mit einer werkzeugtragenden Arbeitsspindel.

US 2007/0182109 A1 zeigt eine Schnellspannvorrichtung zum Einspannen von Werkstücken an werkstücktragenden Spindeln einer Drehmaschinen und zum Einspannen von Werkzeugen an werkzeugtragenden Spindeln von Fräsmaschinen.

### Hintergrund der Erfindung

Dem Stand der Technik sind CNC-gesteuerte Werkzeugmaschinen bekannt, die zumindest 5 Achsen umfassen, die es ermöglichen, ein Werkzeug relativ zu einem zu bearbeitenden Werkstück in 5 Freiheitsgraden frei durch den Raum zum Abtragen von Material von dem Werkstück zu bewegen bzw. zu steuern. CNC ("Computerized Numerical Control") bedeutet hierbei, dass die Werkzeugmaschine numerisch gesteuert wird, z. B. anhand eines NC-Programms bzw. CNC-Programms.

Die 5 Bewegungsfreiheitsgrade umfassen die zumindest drei Raumrichtungsfreiheitsgrade (meist konventionell drei orthogonal ansteuerbare Raumrichtungsfreiheitsgrade, ggf. bezeichnet als X-Achse, Y-Achse und Z-Achse), die durch zumindest drei Linearachsen angesteuert werden können, und zumindest zwei Winkel- bzw. Rotationsfreiheitsgrade, die eine beliebige Werkzeugorientierung relativ zu dem Werkstück ermöglichen. Die Winkel- bzw. Rotationsfreiheitsgrade können hierbei durch zwei, drei oder mehrere Rundachsen der Werkzeugmaschine angesteuert werden (ggf. bezeichnet als A-Achse, B-Achse und C-Achse). Heutige CNC-Werkzeugmaschinen mit zumindest 5 Achsen ermöglichen es insbesondere, die 5 Freiheitsgrade simultan anzusteuern, wodurch besonders komplexe und effiziente Werkzeugwege relativ zu einem eingespannten Werkstück ermöglicht werden. Des Weiteren sind dem Stand der Technik 6 Achsen aufweisende Werkzeugmaschinen bekannt, an denen 3 Linearachsen und 3 Rundachsen simultan angesteuert werden können. Auch Werkzeugmaschinen mit mehr als 6 Achsen sind möglich.

Die dem Stand der Technik bekannten Werkzeugmaschinen sind dazu geeignet, mit einem Werkzeug wie z.B. einem Fräs- oder Bohrwerkzeug ausgerüstet zu werden, das Material von dem Werkstück durch Zerspanen abträgt. Die Steuerung des Werkzeugs erfolgt hierbei mittels einer Steuervorrichtung anhand eines NC-Programms bzw. CNC-Programms. Somit wird eine präzise programmgesteuerte maschinelle Bearbeitung eines in der Werkzeugmaschine eingespannten Werkstücks anhand von Steuerdaten möglich.

Zum rotatorischen Antreiben des Werkzeugs, insbesondere zur Erzeugung einer Schnittbewegung bei dem zerspanenden Bearbeiten eines Werkstücks mit dem Werkzeug, umfassen nach dem Stand der Technik bekannte Werkzeugmaschinen eine Arbeitsspindel bzw. Hauptspindel mit Arbeits- bzw. Hauptspindelantrieb, die ein Werkzeugaufnahmemittel zum Aufnehmen eines Werkzeugs umfasst. Die Werkzeugaufnahme an der Arbeitsspindel ist dazu geeignet Werkzeuge aufzunehmen, insbesondere Werkzeugschnittstellen wie z.B. Werkzeugkegel. Bekannte Werkzeugkegel sind z.B. Morsekegel, Steilkegel oder auch Hohlschaftkegel. Das zu bearbeitende Werkstück wird an einem Einspannmittel der Werkzeugmaschine eingespannt, insbesondere an einem Einspannmittel auf einem Dreh- bzw. Rundtisch der Werkzeugmaschine, der zur rotatorischen Werkstückausrichtung über eine Rundachse rotatorisch angetrieben werden kann. Der Rundtisch bzw. das Einspannmittel kann zudem ggf. mittels einer Schwenkachse geschwenkt werden (Schwenkrundtisch).

Des Weiteren sind die vorstehend beschriebenen Werkzeugmaschinen, wie z.B. Universal-Fräsmaschinen oder andere Werkzeugmaschinen mit Werkzeugwechselvorrichtung, ggf. dazu eingerichtet, einen automatischen programmgesteuerten Werkzeugwechsel an der Arbeitsspindel auszuführen, indem das an der Arbeitsspindel der Werkzeugmaschine eingespannte Werkzeug bzw. an dem Werkzeugaufnahmemittel der Arbeitsspindel aufgenommene Werkzeug mit einem anderen Werkzeug ausgewechselt wird. Hierfür umfassen die Werkzeugmaschinen eine Werkzeugwechseleinrichtung, die dazu eingerichtet ist, das an der Arbeitsspindel eingespannte Werkzeug automatisch auszuwechseln. Weiterhin kann die Werkzeugmaschine ein Werkzeugmagazin zum Lagern von einer Mehrzahl von Werkzeugen umfassen, wobei die Werkzeugwechseleinrichtung bei einem Werkzeugwechsel das an der Arbeitsspindel eingespannte Werkzeug mit einem zuvor in dem Werkzeugmagazin gelagerten Werkzeug auswechselt.

Nach der dem Stand der Technik bekannten Funktionsweise einer Werkzeugwechseleinrichtung wird der Werkzeugwechsel aus dem Werkzeugaufnahmemittel der Arbeitsspindel in das Magazin oder umgekehrt ausgeführt, indem z.B. ein Greifer bzw. eine Greifvorrichtung, insbesondere einer Einfach- oder Doppelgreifervorrichtung des Werkzeugwechslers, die Werkzeuge bzw. Werkzeugkegel, in denen die Werkzeuge aufgenommen sind, greift bzw. aufnimmt. Derartige Werkzeugkegel (zur Aufnahme in Werkzeugaufnahmen. Z.B. Morsekegel, Steilkegel, Hohlschaftkegel) bilden eine standardisierte Schnittstelle zwischen dem Werkzeugaufnahmemittel der Arbeitsspindel und dem Werkzeug und erlauben einen schnellen Werkzeugwechsel bei kleiner Werkzeugwechselzeit. Weiterhin sind dem Stand der Technik sogenannte Pick-Up-Werkzeugwechseleinrichtungen bzw. Pick-Up-Werkzeugwechsler bekannt, die dazu geeignet sind, ein Werkzeug aus dem Werkzeugaufnahmemittel der Arbeitsspindel in das Werkzeugmagazin oder umgekehrt direkt ein- oder auszuwechseln.

Bei einer Bearbeitung von Werkstücken an einer Werkzeugmaschine nach den dem Stand der Technik bekannten Verfahren, insbesondere an einer Fräs/Dreh-Werkzeugmaschinen, einer Dreh-/Fräs-Werkzeugmaschinen, Universal-Fräsmaschinen oder einem Universal-Bearbeitungszentrum, wird ein zu bearbeitendes Werkstück an einem Einspannmittel der Werkzeugmaschine, z.B. auf dem Drehtisch bzw. Rundtisch der Werkzeugmaschine, der mittels einer Rundachse rotatorisch angetrieben werden kann und ggf. auch noch mittels einer oder mehrerer Linearachsen verfahrbar ist und/oder mittels einer oder mehrerer Schwenkachsen geschwenkt werden kann (z.B. ein Rundschwenktisch), oder an einem NC-Teilapparat, eingespannt, und weiterhin wird ein für die Bearbeitung vorgesehenes Werkzeug an der Arbeitsspindel der Werkzeugmaschine eingespannt. Ist es für die Bearbeitung eines Werkstücks erforderlich, unterschiedliche Werkzeuge zu nutzen, so kann ein automatischer Werkzeugwechsel an der Arbeitsspindel ausgeführt werden.

Eine Aufgabe der vorliegenden Erfindung ist es, ein Verfahren zum zerspanenden Bearbeiten eines Werkstücks an einer zumindest 5 Achsen umfassenden Werkzeugmaschine mit einer Arbeitsspindel mit Werkzeugaufnahmemittel und eine entsprechende Werkzeugmaschine zum zerspanenden Bearbeiten eines Werkstücks bereitzustellen, die eine effizientere und zeitsparendere Bearbeitung von Werkstücken an einer Werkzeugmaschine mit einer Arbeitsspindel mit Werkzeugaufnahmemittel im Gegensatz zu den dem Stand der Technik bekannten Verfahren ermöglicht.

Eine weitere Aufgaben der vorliegenden Erfindung ist es, ein effizienteres und zeitsparenderes Verfahren zum Bearbeiten eines Werkstücks an einer Werkzeugmaschine mit einer Arbeitsspindel mit Werkzeugaufnahmemittel und eine entsprechende Werkzeugmaschine für eine Kleinserien- oder Serienproduktion von Werkstücken bereitzustellen, insbesondere z.B. für eine Kleinserien- oder Serienproduktion von gerad-, schräg- , spiral- oder bogenverzahnten Zahnrädern, wie z.B. Tellerrädern, Ritzeln oder Kegelrädern.

### Zusammenfassung der Erfindung

Die vorstehend beschriebenen Aufgaben werden erfindungsgemäß gelöst durch ein Verfahren zum zerspanenden Bearbeiten eines Werkstücks an einer zumindest 5 Achsen umfassenden Werkzeugmaschine mit einem Werkzeug nach Anspruch 1 und eine entsprechende Werkzeugmaschine zum zerspanenden Bearbeiten eines Werkstücks mit einem Werkzeug nach Anspruch 10. Merkmale bevorzugter Ausführungsbeispiele der vorliegenden Erfindung werden durch die Merkmale der abhängigen Ansprüche beschrieben.

Ein Verfahren zum zerspanenden Bearbeiten eines Werkstücks an einer zumindest 5 Achsen umfassenden Werkzeugmaschine mit einem Werkzeug nach der vorliegenden Erfindung wird ausgeführt an einer Werkzeugmaschine, die ein Einspannmittel zum Einspannen eines Werkstücks, insbesondere ein auf einem Dreh- bzw. Rundtisch der Werkzeugmaschine drehfest befestigten Einspannmittel, und eine Arbeitsspindel mit einem Werkzeugaufnahmemittel zum Aufnehmen eines Werkzeugs umfasst.

Der Antrieb der Arbeits- bzw. Hauptspindel ist bei den der Erfindung zu Grunde liegenden Werkzeugmaschinentypen (d.h. z.B. 5-Achs-Fräsmaschinen, 5-Achs-Fräs/Bohr-Werkzeugmaschinen, 5-Achs Fräs-/Dreh-Werkzeugmaschinen und 5-Achs-Universal-Fräsmaschinen und Bearbeitungszentren mit 5 oder mehr simultan ansteuerbaren Achsen) zum rotatorischen Antrieb des Werkzeugs vorgesehen, so dass die Schnittbewegung hauptsächlich durch Antrieb des Werkzeugs erfolgt (im Gegensatz zu der Arbeitsweise von ebenfalls im Stand der Technik bekannten konventionellen Drehmaschinentypen).

Die vorliegende Erfindung betrifft insbesondere Verfahren zum Bearbeiten eines Werkstücks an einer Werkzeugmaschine und eine entsprechende Werkzeugmaschine, die zum fräsenden und/oder bohrenden Bearbeiten eines Werkstücks mittels eines Fräs- bzw. Bohrwerkzeugs geeignet ist, das an der Arbeitsspindel bzw. Hauptspindel der Werkzeugmaschine an einem Werkzeugaufnahmemittel eingespannt bzw. aufgenommen ist und mittels des Spindelantriebs zur Erzeugung einer Schnittbewegung angetrieben werden kann. Insbesondere betrifft die vorliegende Erfindung z.B. 5-Achs-Fräsmaschinen, 5-Achs-Fräs/Bohr-Werkzeugmaschinen, 5-Achs-Fräs-/Dreh-Werkzeugmaschinen und Universal-Fräsmaschinen und Bearbeitungszentren mit 5 oder mehr simultan ansteuerbaren Achsen.

Das Verfahren nach der vorliegenden Erfindung ist durch die folgenden Verfahrensschritte gekennzeichnet:
- Einspannen des Werkstücks an dem Werkzeugaufnahmemittel der Arbeitsspindel bzw. Hauptspindel der Werkzeugmaschine,
- Einspannen des Werkzeugs an dem Einspannmittel der Werkzeugmaschine, und
- programmgesteuertes Steuern des an dem Werkzeugaufnahmemittel der Arbeitsspindel eingespannten Werkstücks relativ zu dem in dem Einspannmittel eingespannten Werkzeug zum Abtragen von Material von dem Werkstück.

Somit wird das zu bearbeitende Werkstück erfindungsgemäß an der Arbeitsspindel der Werkzeugmaschine mittels eines Werkzeugaufnahmemittels eingespannt, das konventionell dafür vorgesehen ist, das Werkzeug aufzunehmen, um das Werkzeug rotatorisch mittels des Spindelantriebs anzutreiben, insbesondere um eine Schnittbewegung der zerspanenden Bearbeitung zu erzeugen, z.B. für fräsende oder bohrende Bearbeitung.

Weiterhin wird das für die Bearbeitung des Werkstücks vorgesehene Werkzeug anstatt in dem Werkzeugaufnahmemittel der Arbeitsspindel, wie es konventionell vorgesehen ist, an dem Einspannmittel der Werkzeugmaschine eingespannt, wobei das Einspannmittel konventionell dafür vorgesehen ist, das zu bearbeitende Werkstück einzuspannen.

Die erfindungsgemäße Einspannsituation des Werkstücks und des Werkzeugs ist somit umgekehrt zu einer konventionell an den zu Grunde liegenden Werkzeugmaschinentypen vorgesehenen Einspannsituation von Werkzeug und Werkstück.

Somit bietet sich der Vorteil, dass eine Einspannsituation von Werkstück und Werkzeug bereitgestellt werden kann, bei der ein automatischer und ggf. programmgesteuerter Werkstückwechsel an einer Werkzeugmaschine effizient durchgeführt werden kann, die eigentlich dazu eingerichtet ist, Werkzeuge an der Arbeitsspindel ein- bzw. auszuwechseln (z.B. eine Universal-Fräsmaschinen oder Universal-Fräs-/Bohr-Werkzeugmaschine oder Universal-Fräs-/Dreh-Werkzeugmaschine, die eine Werkzeugwechselvorrichtung umfasst), wobei bei dem Werkstückwechsel im Gegensatz zu konventionellen Verfahren ein an der Arbeitsspindel eingespanntes Werkstück aus- bzw. eingewechselt oder auch umgespannt werden kann.

Dies ist insbesondere bei Bearbeitungsvorgängen an Werkzeugmaschinen vorteilhaft, bei denen es vorgesehen ist, eine Mehrzahl von Werkstücken an der Werkzeugmaschine zu bearbeiten, z.B. für eine Kleinserienproduktion oder Serienproduktion, bei der eine Mehrzahl von Werkstücken ggf. anhand eines gleichen NC-Programms bearbeitet bzw. gefertigt werden sollen. Die Werkzeugmaschine kann hierzu vorzugsweise eine Werkzeugwechseleinrichtung zum Wechseln der Werkstücke an der Arbeitsspindel (z.B. an einer Universal-Fräsmaschine) und/oder eine Werkstückwechseleinrichtung zum Wechseln der Werkstücke an dem Einspannmittel (z.B. an einem Bearbeitungszentrum) umfassen.

Insbesondere ergibt sich ein besonderer Vorteil bei Bearbeitungsvorgängen, bei denen es nicht oder zumindest nur selten erforderlich ist, ein Werkzeug auszuwechseln. Bei Durchführung eines automatischen Werkstückwechsels mittels der Werkzeugwechselvorrichtung (oder möglicherweise auch mit einer zusätzlichen Werkstückwechseleinrichtung zum Wechseln eines Werkstücks an der Arbeitsspindel), der vorzugsweise programmgesteuert ausgeführt wird, können somit eine Mehrzahl von Werkstücken ohne einen erforderlichen manuellen Eingriff aufeinanderfolgend an der Werkzeugmaschine bearbeitet werden, da der Werkstückwechsel automatisch und ggf. vorzugsweise programmgesteuert ausgeführt werden kann. Somit kann bei der Bearbeitung von einer Mehrzahl von Werkstücken an der Werkzeugmaschine eine höhere Effizienz aufgrund einer deutlichen Zeitersparnis und auch höhere Genauigkeit erreicht werden.

Vorzugsweise umfasst das erfindungsgemäße Verfahren den weiteren Verfahrensschritt programmgesteuertes Auswechseln eines ersten an dem Werkzeugaufnahmemittel der Arbeitsspindel eingespannten Werkstücks mit einem zweiten Werkstück.

Somit kann das Werkstück an der Arbeitsspindel automatisch und programmgesteuert ein- bzw. ausgewechselt werden. Programmgesteuert bedeutet hierbei insbesondere, dass der automatische Werkstückwechsel anhand von Steuerbefehlen eines NC-Programms ausgeführt wird. Somit können eine Mehrzahl an Werkstücken an der Werkzeugmaschine aufeinanderfolgend vollständig programmgesteuert bearbeitet werden, d.h. insbesondere ohne manuellen Eingriff, wobei hierbei die Bearbeitung der Werkstücke und der Werkstückwechsel programmgesteuert ausgeführt werden können.

Vorzugsweise umfasst das erfindungsgemäße Verfahren den weiteren Verfahrensschritt des programmgesteuerten Umspannens des an dem Werkzeugaufnahmemittel der Arbeitsspindel eingespannten Werkstücks, wobei das an dem Werkzeugaufnahmemittel der Arbeitsspindel eingespannte Werkstück vorzugsweise programmgesteuert ausgespannt wird und vorzugsweise in neuer Einspannsituation in das Werkzeugaufnahmemittel der Arbeitsspindel programmgesteuert eingespannt wird.

Somit kann das an der Arbeitsspindel eingespannte Werkstück ggf. zuerst auf einer Seite bearbeitet werden und dann durch programmgesteuertes Umspannen derart an der Arbeitsspindel erneut eingespannt werden, so dass das Werkstück zuerst von einer Seite in einer ersten Einspannsituation bearbeitet werden kann, um nach dem Umspannen an der Arbeitsspindel in einer zweiten Einspannsituation von einer anderen Seite bearbeitet werden zu können. So kann das Werkstück vorteilhaft z.B. zuerst auf der Vorderseite und nach dem Umspannen auf der Rückseite oder auch umgekehrt zuerst auf der Rückseite und nach dem Umspannen auf der Vorderseite bearbeitet werden.

Vorzugsweise umfasst die Werkzeugmaschine eine Werkzeugwechseleinrichtung, die vorzugsweise dazu geeignet ist, ein an dem Werkzeugaufnahmemittel der Arbeitsspindel aufgenommenes Werkzeug programmgesteuert auszuwechseln, wobei der Schritt des programmgesteuerten Auswechselns des ersten Werkstücks mit dem zweiten Werkstück an der Arbeitsspindel und/oder der Schritt des programmgesteuerten Umspannens des in dem Werkzeugaufnahmemittel der Arbeitsspindel eingespannten Werkstücks vorzugsweise mittels der Werkzeugwechseleinrichtung ausgeführt wird, die konventionell für einen Werkzeugwechsel an der Arbeitsspindel vorgesehen ist. Derartige Werkzeugwechseleinrichtungen sind z.B. in Universal-Fräsmaschinen vorgesehen.

Dies bietet den Vorteil, dass eine Werkzeugwechseleinrichtung der Werkzeugmaschine, die konventionell dafür vorgesehen ist, ein Werkzeug an der Arbeitsspindel der Werkzeugmaschine ein- bzw. auszuwechseln erfindungsgemäß für den vorteilhaften Werkstückwechsel an der Arbeitsspindel verwendet werden kann. Weiterhin kann somit ggf. auch der Schritt des Umspannens des Werkstücks in eine neue Einspannsituation mittels der Werkzeugwechseleinrichtung ausgeführt werden, wobei die Werkzeugwechseleinrichtung hierzu vorzugsweise eine zumindest Doppel-Greifer-Werkzeugwechseleinrichtung ist, die zumindest zwei Greifer umfasst, so dass das Werkstück mittels eines ersten Greifers aus der Arbeitsspindel aufgenommen bzw. ausgespannt wird, von einem zweiten Greifer aufgenommen wird und mittels des zweiten Greifers erneut in einer neuen Einspannsituation an der Arbeitsspindel eingespannt werden kann.

Die Werkzeugmaschine kann auch eine Werkstückwechseleinrichtung umfassen, die vorzugsweise dazu eingerichtet ist, ein an dem Werkzeugaufnahmemittel der Arbeitsspindel eingespanntes Werkstück programmgesteuert ein- und/oder auszuwechseln und/oder ein an dem Einspannmittel der Werkzeugmaschine eingespanntes Werkstück programmgesteuert ein- und/oder auszuwechseln, wobei der Schritt des programmgesteuerten Auswechselns des ersten Werkstücks vorzugsweise mit dem zweiten Werkstück an der Arbeitsspindel dann mittels der Werkstückwechseleinrichtung ausgeführt werden kann. Eine derartige Werkstückwechseleinrichtung kann somit ggf. zusätzlich zu der Werkzeugwechseleinrichtung bereitgestellt werden, um ein Werkstück an der Arbeitsspindel mittels der Werkstückwechseleinrichtung programmgesteuert ein- und/oder auszuwechseln und/oder umzuspannen zu können. Die Werkstückwechseleinrichtung ist vorzugsweise eine Greifervorrichtung mit zumindest einem Greifer zum Greifen eines Werkstücks.

Vorzugsweise ist die Werkstückwechseleinrichtung eine zumindest Doppel-Greifer-Werkstückwechseleinrichtung, die zumindest zwei Greifer umfasst, so dass das Werkstück mittels eines ersten Greifers aus der Arbeitsspindel aufgenommen bzw. ausgespannt werden kann, von einem zweiten Greifer aufgenommen werden kann und mittels des zweiten Greifers erneut in einer neuen Einspannsituation an der Arbeitsspindel eingespannt werden kann. Die Werkstückwechseleinrichtung kann z.B. auf dem Werkzeugtisch der Werkzeugmaschine bereitgestellt werden.

Vorzugsweise umfasst das erfindungsgemäße Verfahren den weiteren Verfahrensschritt programmgesteuertes Ein- und/oder Auswechseln des an dem Einspannmittel eingespannten Werkzeugs, wobei eine zusätzliche Werkzeugwechseleinrichtung, die vorstehend genannte Werkzeugwechseleinrichtung oder eine Werkstückwechseleinrichtung, wie sie z.B. zum Wechseln eines Werkstücks an einem Einspannmittel zum Einspannen von Werkstücken bei Bearbeitungszentren verwendet wird, vorzugsweise dazu eingerichtet ist, das an dem Einspannmittel eingespannte Werkzeug programmgesteuert ein- und/oder auszuwechseln.

Somit kann ebenfalls ein an dem Einspannmittel eingespanntes Werkzeug programmgesteuert ein- bzw. ausgewechselt werden. Die Werkzeug- bzw. Werkstückwechseleinrichtung kann hierfür z.B. eine Greifvorrichtung mit einem oder mehreren Greifern zum programmgesteuerten Greifen des in dem Einspannmittel aufgenommenen bzw. eingespannten Werkzeugs umfassen. Vorzugsweise ist eine Werkzeug- bzw. Werkstückwechseleinrichtung dazu eingerichtet ein Werkzeug an der Arbeitsspindel, ein Werkzeug an dem Einspannmittel und/oder ein Werkzeug in einem Werkzeugmagazin aufzunehmen, ein Werkzeug an der Arbeitsspindel und/oder dem Einspannmittel ein- bzw. auszuwechseln, und/oder ein Werkzeug in einem Werkzeugmagazin abzulegen.

Vorzugsweise umfasst die Werkzeugmaschine weiterhin eine Palette und/oder ein Magazin, die dazu geeignet sind, Werkstücke oder Werkstücke und Werkzeuge zu lagern, wobei das zweite Werkstück vor dem Auswechseln des ersten Werkstücks mit dem zweiten Werkstück vorzugsweise in der Palette oder dem Magazin der Werkzeugmaschine gelagert ist.

Somit ist vorteilhaft eine Werkstückbevorratung an der Werkzeugmaschine ermöglicht, wobei ein nicht an der Arbeitsspindel eingesetztes Werkstück vor und/oder nach der Bearbeitung an der Werkzeugmaschine in der Palette oder dem Magazin der Werkzeugmaschine gelagert werden kann. Zur Bearbeitung können die Werkstücke an der Arbeitsspindel der Werkzeugmaschine eingewechselt werden, und ggf. mit einem an der Arbeitsspindel eingespannten Werkstück ausgewechselt werden.

Vorzugsweise ist das Werkstück, das an der Arbeitsspindel eingespannt ist, in einer Einspannvorrichtung eingespannt und vorzugsweise derart an dem Werkzeugaufnahmemittel der Arbeitsspindel eingespannt, dass die Einspannvorrichtung in dem Werkzeugaufnahmemittel der Arbeitsspindel aufgenommen ist. Vorzugsweise weist die Einspannvorrichtung zur Aufnahme an dem Werkzeugaufnahmemittel der Arbeitsspindel ein Werkzeugaufnahme-Schnittstellenmittel auf, insbesondere einen Werkzeugkegel wie z.B. einen Morsekegel, einen Steilkegel oder einen Hohlschaftkegel.

Erfindungsgemäß kann somit auch als unabhängiger Gegenstand eine Einspannvorrichtung wie folgt bereitgestellt werden:

Einspannvorrichtung zum Einspannen eines Werkstücks an einer Werkzeugmaschine, insbesondere zum drehfesten Einspannen eines Werkstücks, mit:
einem Einspannmittel zum drehfesten Einspannen des Werkstücks an der Einspannvorrichtung und
einem Werkzeugaufnahme-Schnittstellenmittel zur Aufnahme an einem Werkzeugaufnahmemittel einer Arbeitsspindel der Werkzeugmaschine, wobei das Werkzeugaufnahme-Schnittstellenmittel vorzugsweise einen Werkzeugkegel aufweist, wie z.B. einen Morsekegel, einen Steilkegel oder einen Hohlschaftkegel.

Somit wird eine Einspannvorrichtung bereitgestellt, die es einerseits ermöglich das Werkstück einzuspannen und, die es andererseits ermöglicht, das in der Einspannvorrichtung eingespannte Werkstück an der Arbeitsspindel einzusetzen, indem die Einspannvorrichtung in dem Werkzeugaufnahmemittel der Arbeitsspindel eingesetzt bzw. aufgenommen werden kann. Hierzu ist die Einspannvorrichtung vorzugsweise analog zu einer Werkzeugaufnahme, wie z.B. einem standardisierten Werkzeugkegel (z.B. Morsekegel, Steilkegel oder Hohlschaftkegel), dazu geeignet, an der Werkzeugaufnahme der Arbeitsspindel aufgenommen zu werden.

Weist die Werkzeugmaschine z.B. weiterhin eine Werkzeugwechseleinrichtung und/oder eine Werkstückwechseleinrichtung auf, die dazu geeignet ist, ein Werkzeug an der Arbeitsspindel ein- bzw. auszuwechseln und/oder ein Werkzeug in dem Einspannmittel der Werkzeugmaschine ein- bzw. auszuwechseln, indem eine Greifeinrichtung mittels eines Greifers eine Werkzeugaufnahme, wie z.B. einen genormten Werkzeugkegel, greift bzw. aufnimmt, so ist die Einspannvorrichtung vorzugsweise dazu geeignet, analog zu der Werkzeugaufnahme, wie z.B. einem Werkzeugkegel, mittels eines Greifers gegriffen bzw. aufgenommen zu werden (insbesondere an dem Werkzeugaufnahme-Schnittstellenmittel), um den Werkstückwechsel an der Arbeitsspindel auszuführen.

Vorzugsweise ist das Werkzeug ein Messerkopf, der dazu geeignet ist, eine Verzahnung auf dem Werkstück, insbesondere auf dem an dem Werkzeugaufnahmemittel der Arbeitsspindel eingespannten Werkstück, zu fräsen.

Somit kann das erfindungsgemäße Verfahren insbesondere vorteilhaft bei der Bearbeitung bzw. Fertigung von Verzahnungen auf Werkstücken an der Werkzeugmaschine ausgeführt werden. Insbesondere betrifft dies die Fertigung von Zahnrädern, z.B. Tellerrädern, Ritzeln oder Kegelrädern. Somit kann das Verfahren vorteilhaft bei der Fertigung von derartigen Zahnrädern in einer Kleinserienproduktion oder Serienproduktion eingesetzt werden, bei der eine Mehrzahl von Zahnrädern aufeinanderfolgend programmgesteuert an der Werkzeugmaschine gefertigt werden. Ein manueller Eingriff ist somit nicht erforderlich, und ein an der Arbeitsspindel eingespanntes, bearbeitetes Zahnrad kann aus der Arbeitsspindel ausgewechselt werden und ein weiteres Werkstück kann automatisch an der Arbeitsspindel eingewechselt werden, um ein weiteres Zahnrad an der Werkzeugmaschine herzustellen.

Hierbei macht sich die Erfindung den Umstand zu nutze, dass bei der Fertigung eines Zahnrades aus einem ggf. vorbearbeiteten Werkstück, bei dem zur Herstellung eines Zahnrades noch eine Verzahnung auf dem Werkstück gefertigt werden soll, ein Messerkopf verwendet werden kann, um die Verzahnung zu fertigen, und es somit nicht erforderlich ist, bei der Fertigung das Werkzeug bzw. den Messerkopf zu wechseln.

Der Messerkopf kann somit für die Fertigung von Zahnrädern aufeinanderfolgend an der Werkzeugmaschine in dem Einspannmittel in der erfindungsgemäßen Einspannsituation eingespannt bleiben und die Werkstücke können erfindungsgemäß aufeinanderfolgend zur Bearbeitung an der Arbeitsspindel ein- bzw. ausgewechselt werden. Somit kann eine Verzahnung auf dem Werkstück effizient und programmgesteuert an 5-Achs-Werkzeugmaschinen wie z.B. 5-Achs-Fräsmaschinen, 5-Achs-Fräs/Bohr-Werkzeugmaschinen, 5-Achs-Fräs-/Dreh-Werkzeugmaschinen und Universal-Fräsmaschinen und Bearbeitungszentren mit 5 oder mehr simultan ansteuerbaren Achsen mittels eines Messerkopfes gefertigt werden, wie es z.B. gemäß des Standes der Technik für die sogenannten Gleason-, Klingelnberg- oder Oerlikon-Verfahren an Spezial-Kegelradfräsmaschinen bzw. Spezial-Wälzfräsmaschinen ausgeführt wird.

Für Zahnradfertigung mittels eines Messerkopfes z.B. gemäß dem Gleason-, Klingelnberg- oder Oerlikon-Verfahren sind konventionell spezielle Kegelradfräsmaschinen erforderlich, an denen keine weitere Bearbeitung des Werkstücks möglich ist.

Erfindungsgemäß ist es somit erstmals und vorteilhaft möglich eine Zahnradbearbeitung mittels eines Messerkopfes z.B. nach dem Gleason-, Klingelnberg- oder Oerlikon-Verfahren an einer 5-Achs-Werkzeugmaschine wie z.B. 5-Achs-Fräsmaschinen, 5-Achs-Fräs/Bohr-Werkzeugmaschinen, 5-Achs-Fräs-/Dreh-Werkzeugmaschinen und Universal-Fräsmaschinen und Bearbeitungszentren mit 5 oder mehr simultan ansteuerbaren Achsen mittels eines Messerkopfes auszuführen, der auf dem ggf. mittels einer Schwenkachse schwenkbaren Dreh- bzw. Rundtisch der Werkzeugmaschine eingespannt werden kann.

Die erforderliche Drehung des Messerkopfes in gemäß Gleason-, Klingelnberg- oder Oerlikon-Verfahren kann dann erfindungsgemäß mittels einer den Dreh- bzw. Rundtisch antreibenden Rundachse angetrieben werden. Die erforderliche Drehung des Werkstücks kann z.B. durch den Spindelantrieb der Arbeits- bzw. Hauptspindel angetrieben werden. Zudem ist eine simultane Steuerung der zumindest drei Linearachsen für Vorschubbewegungen möglich.

Vorzugsweise umfasst der Messerkopf eine Mehrzahl von Schneidmessern, die dazu geeignet sind, eine oder mehrere Zahnlücken einer Verzahnung auf dem Werkstück, insbesondere auf dem an dem Werkzeugaufnahmemittel der Arbeitsspindel eingespannten Werkstück, zu fräsen.

Dies hat den Vorteil, dass für die Fertigung von einer Verzahnung auf einem Werkstück, z.B. bei der Fertigung von Zahnrädern, wie Tellerrädern, Ritzeln und Kegelrädern, an einer zumindest 5-Achsen umfassenden programmsteuerbaren Werkzeugmaschine, z.B. an einer Fräs/Dreh-Werkzeugmaschine, an einer Dreh-/Fräs-Werkzeugmaschine, einer Universal-Fräsmaschine oder an einem Universal-Bearbeitungszentrum, Zahnform-Messerköpfe als Werkzeug benutzt werden können, die dem Stand der Technik zur Fertigung von Zahnrädern an speziellen Zahnradfräsmaschinen (z.B. Spezial-Kegelradfräsmaschinen bzw. Spezial-Wälzfräsmaschinen) bekannt sind.

Derartige dem Stand der Technik bekannte Zahnform-Messerköpfe umfassen einen rotationssymmetrischen Grundkörper zum Einspannen an einer Bearbeitungsspindel einer speziellen Zahnradfräsmaschine. Des Weiteren umfassen derartige Zahnform-Messerköpfe Messer bzw. Schneiden, die dazu geeignet sind, auf einem Werkstück Zahnlücken einer Verzahnung zu fräsen bzw. Schneiden, indem der Zahnform-Messerkopf rotatorisch angetrieben wird. Dies ermöglicht es, dem Stand der Technik bekannte Zahnradformen, insbesondere gerad-, schräg-, spiral- oder bogenverzahnte Zahnräder zu fertigen, z.B. analog zu den dem Stand der Technik bekannten Gleason-, Oerlikon- bzw. Klingelnberg-Verfahren an konventionellen Zahnradfräsmaschinen mittels eines Zahnform-Messerkopfes.

Wird ein derartiger Zahnform-Messerkopf mit einem Werkzeugaufnahme-Schnittstellenmittel, wie z.B. mit einem standardisierten Werkzeugkegel (z.B. Morsekegel, Steilkegel oder Hohlschaftkegel), versehen oder mit einem derartigen Werkzeugaufnahme-Schnittstellenmittel drehfest verbunden, so kann der Zahnfom-Messerkopf analog zu einem normalen Werkzeug ebenfalls an dem Werkzeugaufnahmemittel der Arbeitsspindel automatisch ein- und ausgewechselt werden, im Gegensatz zu einer dem Stand der Technik bekannten Zahnradfräsmaschine. In diesem Falle kann dann das Werkstück in dem Einspannmittel der Werkzeugmaschine eingespannt werden und ebenfalls gemäß Gleason-, Oerlikon- bzw. Klingelnberg-Verfahren gefertigt werden. Durch einen automatischen Werkzeugwechsel an der Arbeitsspindel können danach vorteilhaft Werkzeuge zur Nachbearbeitung bzw. Feinbearbeitung des Werkstücks eingewechselt werden. Dies ist bei den bekannten Spezial-Zahnradfräsmaschinen wie z.B. Spezial-Kegelradfräsmaschinen bzw. Spezial-Wälzfräsmaschinen nicht möglich.

Somit kann ein Zahnrad z.B. analog zu den dem Stand der Technik bekannten Gleason-, Oerlikon- bzw. Klingelnberg-Verfahren, vorteilhaft an einer Fräs-/Dreh-Werkzeugmaschine, einer Dreh-/Fräs-Werkzeugmaschine, einer Universal-Fräsmachine oder einem Universal-Bearbeitungszentrum gefertigt werden, so dass deren Flexibilität und deren Einsatzgebiet signifikant erhöht werden kann. Dies bietet aufgrund der Möglichkeit eines automatischen Werkzeugwechsels weiterhin den Vorteil, dass eine Zahnradfertigung an den vorstehend genannten Werkzeugmaschinen inklusive einer Nach- und/oder Vorbearbeitung des Werkstücks mit weiteren Werkzeugen der Werkzeugmaschine möglich ist.

Vorzugsweise wird die Relativbewegung zwischen dem an der Arbeitsspindel eingespannten Werkstück und dem in dem Einspannmittel eingespannten Werkzeug mittels der zumindest 5 Achsen der Werkzeugmaschine gesteuert, insbesondere in dem erfindungsgemäßen Verfahrensschritt des programmgesteuerten Steuerns des an dem Werkzeugaufnahmemittel der Arbeitsspindel eingespannten Werkstücks relativ zu dem in dem Einspannmittel eingespannten Werkzeug zum Abtragen von Material von dem Werkstück.

Somit ist es bei der erfindungsgemäßen Einspannsituation von Werkzeug und Werkstück analog zu der dem Stand der Technik bekannten Einspannsituation möglich, die Relativbewegung von Werkstück und Werkzeug in 5 Freiheitsgraden mittels der zumindest 5 ansteuerbaren Achsen der Werkzeugmaschine zu bewegen. Somit können Werkzeug und Werkstück zumindest mit den gleichen Freiheitsgraden und der gleichen Flexibilität relativ zueinander gesteuert werden, die gegeben sind, wenn das Werkstück und das Werkzeug auf konventionelle Weise an der Werkzeugmaschine eingespannt sind. Vorzugsweise umfassen die zumindest 5 Achsen der Werkzeugmaschine zumindest 3 Linearachsen und 2 Rundachsen. Dies ermöglicht die Steuerung in zumindest 5 Freiheitsgraden, d.h. drei linearen Freiheitsgraden und zwei rotatorischen Freiheitsgraden. Die 3 Linearachsen sind hierbei vorzugsweise orthogonal angeordnet.

Vorzugsweise ist das Einspannmittel dazu geeignet, das Werkzeug auf einem Drehtisch der Werkzeugmaschine einzuspannen, bzw. vorzugsweise das Werkzeug auf einem Drehtisch der Werkzeugmaschine insbesondere drehfest einzuspannen, wobei der Drehtisch vorzugsweise weiterhin dazu geeignet ist, das in dem Einspannmittel eingespannte Werkzeug rotatorisch anzutreiben. Somit kann das Werkstück auf dem Drehtisch der Werkzeugmaschine eingespannt werden, so dass eine rotatorische Bewegung des eingespannten Werkstücks mittels einer Rundachse der Werkzeugmaschine angetrieben werden kann, die dazu geeignet ist, den Drehtisch der Werkzeugmaschine rotatorisch anzutreiben.

Beispielsweise ist das Einspannmittel drehfest auf einem Dreh- bzw. Rundtisch der Werkzeugmaschine befestigt, wobei eine erste Rundachse, die dazu eingerichtet ist, den Dreh- bzw. Rundtisch rotatorisch anzutreiben. Vorzugsweise kann der Dreh- bzw. Rundtisch translatorisch in zwei oder drei Raumrichtungen verfahren werden mittels zwei oder drei vorzugsweise orthogonal ausgerichteten Linearachsen (z.B. X- und Y-Achse oder X-, Y- und Z-Achse) und/oder mittels einer oder mehrerer Schwenkachsen geschwenkt werden. Die Arbeitsspindel ist vorzugsweise an einem schwenkbaren Universal-Fräskopf der Werkzeugmaschine angeordnet, welcher mittels einer weiteren Rundachse verschwenkbar ist und ggf. mittels einer oder mehrerer Linearachsen verfahrbar ist (z.B. Z-Achse oder Z-Achse und X-Achse und/oder Y-Achse).

Vorzugsweise umfasst das Einspannmittel einen NC-Teilapparat, wobei das Werkzeug vorzugsweise an dem NC-Teilapparat eingespannt ist und der NC-Teilapparat vorzugsweise dazu geeignet ist, das eingespannte Werkzeug rotatorisch anzutreiben. Somit kann das Werkstück an einem NC-Teilapparat der Werkzeugmaschine bzw. an einem auf einem Drehtisch der Werkzeugmaschine befestigten NC-Teilapparat eingespannt werden, so dass eine rotatorische Bewegung des eingespannten Werkstücks mittels des NC-Teilapparats angetrieben wird.

Vorzugsweise ist das an dem Einspannmittel eingespannte Werkzeug eine Werkzeugvorrichtung, die ein Bearbeitungsmittel zum Bearbeiten des Werkstücks und ein Antriebsmittel zum Antreiben des Bearbeitungsmittels umfasst. Somit kann eine Werkzeugvorrichtung an dem Einspannmittel der Werkzeugmaschine eingespannt werden, die sowohl ein Bearbeitungsmittel, z.B. ein Fräswerkzeug oder Bohrwerkzeug, umfasst, als auch ein Antriebsmittel zum Antreiben des Bearbeitungsmittels, insbesondere zum rotatorischen Antreiben des Bearbeitungsmittels. Die Werkzeugvorrichtung stellt somit vorteilhaft ein Komplettwerkzeug mit integriertem Antrieb bereit und kann in dem Einspannmittel der Werkzeugmaschine eingespannt werden.

Des Weiteren stellt die vorliegende Erfindung eine im folgenden beschriebene Werkzeugmaschine bereit, die dazu eingerichtet ist, das Verfahren nach der vorliegenden Erfindung auszuführen, insbesondere ein erfindungsgemäßes Verfahren mit einem oder mehreren der Merkmale der vorstehend beschriebenen bevorzugten Ausgestaltungen des erfindungsgemäßen Verfahrens. Bezüglich der Vorteile einer Werkzeugmaschine nach der vorliegenden Erfindung sei auf die vorstehend in Bezug auf das erfindungsgemäße Verfahren beschriebene Vorteile verwiesen.

Eine Werkzeugmaschine, insbesondere Universal-Fräsmaschine oder Bearbeitungszentrum, zum programmgesteuerten, zerspanenden Bearbeiten eines Werkstücks mit einem Werkzeug, insbesondere anhand von Steuerdaten bzw. eines NC-Programms, nach der vorliegenden Erfindung umfasst ein Einspannmittel zum Einspannen eines Werkstücks, eine Arbeitsspindel mit einem Werkzeugaufnahmemittel zum Aufnehmen eines Werkzeugs und zumindest 5 Achsen. Die Werkzeugmaschine nach der vorliegenden Erfindung ist dadurch gekennzeichnet, dass
das Werkzeugaufnahmemittel der Arbeitsspindel dazu eingerichtet ist, dass das Werkstück an dem Werkzeugaufnahmemittel eingespannt wird, bzw. das Werkstück an dem Werkzeugaufnahmemittel eingespannt ist,
das Einspannmittel dazu eingerichtet ist, dass das Werkzeug an dem Einspannmittel eingespannt wird, bzw. das Werkzeug an dem Einspannmittel eingespannt ist, und
die Werkzeugmaschine dazu eingerichtet ist, das an dem Werkzeugaufnahmemittel der Arbeitsspindel eingespannte Werkstück relativ zu dem an dem Einspannmittel eingespannten Werkzeug zum Abtragen von Material von dem Werkstück programmgesteuert zu steuern. Insbesondere ist die Werkzeugmaschine der vorliegenden Erfindung vorzugsweise dazu eingerichtet, zumindest eines der vorstehend beschriebenen Verfahren auszuführen.

Vorzugsweise ist die Werkzeugmaschine dazu eingerichtet, ein erstes an dem Werkzeugaufnahmemittel der Arbeitsspindel eingespanntes Werkstück mit einem zweiten Werkstück programmgesteuert auszuwechseln.

Vorzugsweise ist die Werkzeugmaschine dazu eingerichtet das an dem Werkzeugaufnahmemittel der Arbeitsspindel eingespannte Werkstück programmgesteuert umzuspannen, wobei das an dem Werkzeugaufnahmemittel der Arbeitsspindel eingespannte Werkstück vorzugsweise programmgesteuert ausgespannt wird und vorzugsweise in neuer Einspannsituation an dem Werkzeugaufnahmemittel der Arbeitsspindel programmgesteuert eingespannt wird.

Vorzugsweise umfasst die Werkzeugmaschine eine Werkzeugwechseleinrichtung, die dazu geeignet ist, ein an dem Werkzeugaufnahmemittel der Arbeitsspindel aufgenommenes Werkzeug programmgesteuert auszuwechseln, wobei die Werkzeugwechseleinrichtung vorzugsweise weiterhin dazu geeignet ist, das erste Werkstück mit dem zweiten Werkstück an der Arbeitsspindel programmgesteuert auszuwechseln und/oder das in dem Werkzeugaufnahmemittel der Arbeitsspindel eingespannte Werkstück programmgesteuert umzuspannen.

Vorzugsweise ist die Werkzeugwechseleinrichtung weiterhin dazu geeignet, ein an dem Einspannmittel eingespanntes Werkzeug programmgesteuert ein- und/oder auszuwechseln.

Vorzugsweise umfasst die Werkzeugmaschine eine Werkstückwechseleinrichtung, die dazu geeignet ist, ein an dem Werkzeugaufnahmemittel der Arbeitsspindel eingespanntes Werkstück programmgesteuert auszuwechseln, wobei die Werkstückwechseleinrichtung weiterhin vorzugsweise dazu geeignet ist, das erste Werkstück mit dem zweiten Werkstück an der Arbeitsspindel programmgesteuert auszuwechseln und/oder das in dem Werkzeugaufnahmemittel der Arbeitsspindel eingespannte Werkstück programmgesteuert umzuspannen.

Vorzugsweise umfasst die Werkzeugmaschine eine Palette und/oder ein Magazin, die dazu eingerichtet sind, Werkstücke oder Werkstücke und Werkzeuge zu lagern, wobei das zweite Werkstück vor dem Auswechseln des ersten Werkstücks mit dem zweiten Werkstück vorzugsweise in der Palette oder dem Magazin der Werkzeugmaschine gelagert ist.

Vorzugsweise ist das Werkzeugaufnahmemittel der Arbeitsspindel dazu geeignet, eine Einspannvorrichtung aufzunehmen, wobei das Werkstück vorzugsweise an der Einspannvorrichtung eingespannt ist und vorzugsweise derart an dem Werkzeugaufnahmemittel der Arbeitsspindel eingespannt ist, dass die Einspannvorrichtung an dem Werkzeugaufnahmemittel der Arbeitsspindel aufgenommen ist. Vorzugsweise umfasst die Einspannvorrichtung zur Aufnahme in dem Werkzeugaufnahmemittel der Arbeitsspindel ein Werkzeugaufnahme-Schnittstellenmittel wie z.B. einen Werkzeugkegel (z.B. Morsekegel, Steilkegel oder Hohlschaftkegel).

Vorzugsweise wird die Relativbewegung zwischen dem an der Arbeitsspindel eingespannten Werkstück und dem an dem Einspannmittel eingespannten Werkzeug mittels der zumindest 5 Achsen der Werkzeugmaschine gesteuert. Vorzugsweise umfassen die zumindest 5 Achsen der Werkzeugmaschine zumindest 3 Linearachsen und 2 Rundachsen.

Vorzugsweise ist das Einspannmittel dazu geeignet, das Werkzeug auf einem Drehtisch der Werkzeugmaschine einzuspannen, bzw. vorzugsweise das Werkzeug drehfest auf einem Drehtisch der Werkzeugmaschine einzuspannen, wobei der Drehtisch vorzugsweise dazu geeignet ist, das in dem Einspannmittel eingespannte Werkzeug rotatorisch anzutreiben.

Vorzugsweise umfasst das Einspannmittel einen NC-Teilapparat, wobei das Werkzeug vorzugsweise an dem NC-Teilapparat eingespannt ist und der NC-Teilapparat vorzugsweise dazu geeignet ist, das eingespannte Werkzeug rotatorisch anzutreiben.

Vorzugsweise ist das in dem Einspannmittel eingespannte Werkzeug eine Werkzeugvorrichtung, die ein Bearbeitungsmittel zum Bearbeiten des Werkstücks und ein Antriebsmittel zum Antreiben des Bearbeitungsmittels umfasst.

### Kurzbeschreibung der Figuren

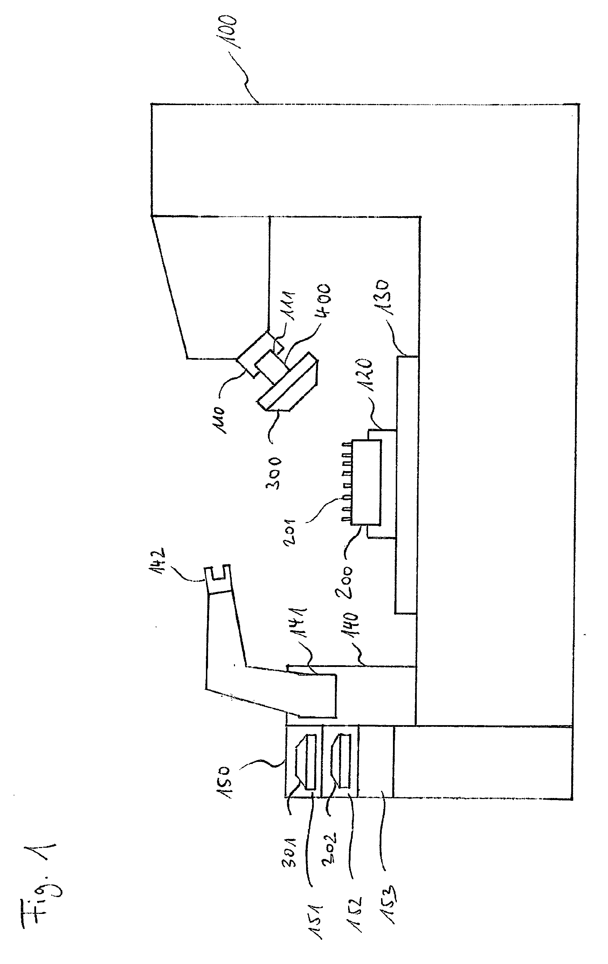

Fig. 1 zeigt eine beispielhafte, schematische Darstellung eines Ausführungsbeispiels einer Werkzeugmaschine zum Bearbeiten eines Werkstücks nach der vorliegenden Erfindung.

### Detaillierte Beschreibung der Figuren und bevorzugter Ausführungsbeispiele der vorliegenden Erfindung

Im Folgenden wird die vorliegende Erfindung detailliert anhand eines bevorzugten Ausführungsbeispiels einer Werkzeugmaschine zum Bearbeiten eines Werkstücks und eines Verfahrens nach der vorliegenden Erfindung anhand einer beispielhaften, schematischen Darstellung beschrieben und erläutert.

Fig. 1 zeigt eine beispielhafte, schematische Darstellung eines bevorzugten Ausführungsbeispiels einer Werkzeugmaschine 100 zum Bearbeiten eines Werkstücks 300 nach der vorliegenden Erfindung, die dazu eingerichtet ist, ein Verfahren nach einem bevorzugten Ausführungsbeispiel der vorliegenden Erfindung auszuführen. Insbesondere wird im Folgenden ein bevorzugtes Ausführungsbeispiel eines Verfahrens der vorliegenden Erfindung beschrieben, bei dem Zahnräder, wie z.B. Tellerräder, Ritzel oder Kegelräder, an einer 5 Achsen umfassenden Werkzeugmaschine mit einem Zahnform-Messerkopf gefertigt werden. Die vorliegende Erfindung ist jedoch nicht auf das Fertigen von Zahnrädern mittels eines Zahnform-Messerkopfes beschränkt, sondern eignet sich insbesondere für eine aufeinanderfolgende Bearbeitung von einer Mehrzahl von Werkstücken an einer Werkzeugmaschine, bei der für die Bearbeitung der einzelnen Werkstücke nur ein Werkzeug oder zumindest nur wenige Werkzeuge erforderlich sind.

Die Werkzeugmaschine umfasst eine Arbeitsspindel 110 mit einem Werkzeugaufnahmemittel 111, das dazu geeignet ist, ein Werkzeug aufzunehmen bzw. einzuspannen. Hierzu ist das Werkzeugaufnahmemittel 111 der Arbeitsspindel 110 dazu geeignet, ein Werkzeug aufzunehmen, indem eine standardisierte Werkzeugaufnahme, z.B. ein genormter Werkzeugkegel wie z.B. die bekannten Werkzeugkegelausführungen Morsekegel, Steilkegel oder Hohlschaftkegel, in dem Werkzeugaufnahmemittel 111 aufgenommen und verriegelt werden kann. Die Arbeitsspindel 110 der Werkzeugmaschine 100 ist dazu geeignet, ein in dem Werkzeugaufnahmemittel 111 aufgenommenes Werkzeug, z.B. Fräs- und/oder Bohrwerkzeuge oder andere Werkzeuge, zur Erzeugung einer Schnittbewegung rotatorisch anzutreiben, um in einer zerspanenden Bearbeitung Material von einem Werkstück abzutragen.

Weiterhin umfasst die Werkzeugmaschine 100 ein Einspannmittel 120, dass dazu geeignet ist, ein zu bearbeitendes Werkstück an der Werkzeugmaschine 100 einzuspannen. Beispielhaft ist hierbei in Fig. 1 gezeigt, dass das Einspannmittel 120 drehfest auf einem Drehtisch 130 der Werkzeugmaschine 100 befestigt ist. Durch rotatorisches Antreiben des Drehtisches 130 kann ein in dem Einspannmittel 120 eingespanntes Werkstück rotatorisch angetrieben werden, da das Einspannmittel 120 drehfest auf dem Drehtisch 130 befestigt ist. Jedoch ist die vorliegende Erfindung nicht auf derartige Einspannmittel 120 begrenzt, die drehfest auf einem Drehtisch 130 der Werkzeugmaschine 100 befestigt sind. Vielmehr kann ein erfindungsgemäßes Einspannmittel in einem weiteren Ausführungsbeispiel der vorliegenden Erfindung einen NC-Teilapparat umfassen, der dazu geeignet ist, ein an dem NC-Teilapparat eingespanntes Werkstück rotatorisch anzutreiben. Ein derartiger NC-Teilapparat kann weiterhin auf einem Drehtisch 130 der Werkzeugmaschine 100 drehfest befestigt sein. Weiterhin sind Ausführungsbeispiele möglich, bei denen das Werkzeug eine Komplettwerkzeugvorrichtung ist, die zusätzlich zu dem Bearbeitungsmittel des Werkzeugs, wie z.B. einem Fräser oder Bohrer, eine Antriebseinrichtung zum rotatorischen Antreiben des Bearbeitungsmittels umfassen kann.

Die Werkzeugmaschine umfasst nach diesem Ausführungsbeispiel drei simultan ansteuerbare orthogonale Linearachsen und zwei simultan ansteuerbare Rundachsen, um ein in dem Einspannmittel 120 eingespanntes Werkstück relativ zu einem an der Arbeitsspindel 110 eingespannten bzw. aufgenommenen Werkzeug in drei linearen und zwei rotatorischen Freiheitsgraden programmgesteuert zu steuern, z.B. anhand eines NC-Programms. Somit kann jede beliebige relative Position und Lage des Werkstücks und des Werkzeugs zueinander angefahren bzw. angesteuert werden. Hierbei ist eine der Rundachsen der Werkzeugmaschine nach diesem Ausführungsbeispiel beispielsweise dazu geeignet, den Drehtisch 130 der Werkzeugmaschine 100 rotatorisch anzutreiben. Eine zumindest weitere Rundachse (nicht dargestellt) ist beispielsweise dazu geeignet, die räumliche Winkelausrichtung der Arbeitsspindel 110 auszurichten wie es z.B. von Werkzeugmaschinen mit schwenkbarem Universal-Fräskopf bekannt ist. Mittels der drei oder mehr orthogonalen Linearachsen (nicht dargestellt) kann beispielsweise die Position der Arbeitsspindel 110 und/oder des Drehtisches 130 in den drei Raumrichtungen verfahren werden. In einem weiteren Ausführungsbeispiel kann die Position der Arbeitsspindel mittels zumindest zwei Linearachsen und die Position des Drehtisches mittels zumindest einer dritten Linearachse verfahren werden, so dass die relative Position eines Werkstücks zu einem Werkzeug ebenfalls wieder in drei räumlichen Freiheitsgraden angesteuert werden kann. In einem weiteren Ausführungsbeispiel kann die Position der Arbeitsspindel mittels zumindest einer Linearachse und die Position des Drehtisches mittels zumindest zwei weiterer Linearachsen verfahren werden, so dass die relative Position eines Werkstücks zu einem Werkzeug ebenfalls wieder in drei räumlichen Freiheitsgraden angesteuert werden kann.

Die Werkzeugmaschine als 5-Achs-Fräs-Werkzeugmaschine, 5-Achs-Fräs-/Bohr-Werkzeugmaschine, 5-Achs-Fräs-/Dreh-Werkzeugmaschine, 5-Achs-Universal-Fräsmaschine oder 5-Achs-Bearbeitungszentrum ausgeführt sein. Auch 6-Achs-Fräs-Werkzeugmaschinen, 6-Achs-Fräs-/Bohr-Werkzeugmaschinen, 6-Achs-Fräs/Dreh-Werkzeugmaschinen, 6-Achs-Universal-Fräsmaschinen oder 6-Achs-Bearbeitungszentren oder Ausführungen mit mehr als 6 Achsen sind denkbar. Die Werkzeugmaschine 100 kann z.B. als Monoblock-Werkzeugmaschine in Monoblockbauweise (wie in dem Ausführungsbeispiel gemäß Fig. 1 dargestellt), als Portal-Werkzeugmaschine in Portalbauweise, als Gantry-Werkzeugmaschine in Gantry-Bauweise, als Fahrständer-Bett-Maschine, als Horizontal-Bearbeitungszentrum oder auch als Vertikalbearbeitungszentrum ausgeführt sein.

Weiterhin umfasst die in Fig. 1 dargestellte Werkzeugmaschine 100 eine Werkzeugwechseleinrichtung 140, die dazu geeignet ist, ein Werkzeug an der Arbeitsspindel 110 automatisch und programmgesteuert ein- bzw. auszuwechseln. Es handelt sich somit um eine Universal-Fräsmaschine, da eine Werkzeugwechseleinrichtung vorgesehen ist. Bei Ausführungsbeispielen, bei denen zusätzlich ein Werkstückwechsler zum Auswechseln von Werkstücken an dem Einspannmittel 120 auf dem Drehtisch 130 vorgesehen ist, spricht man von einem Bearbeitungszentrum.

Die Werkzeugwechseleinrichtung 140 umfasst nach diesem Ausführungsbeispiel eine Greifervorrichtung 141 mit einem Greifer 142, um ein in dem Werkzeugaufnahmemittel 111 der Arbeitsspindel 110 aufgenommenes Werkzeug automatisch ein- bzw. auszuwechseln. Hierzu ist die Greifervorrichtung 141 dazu geeignet, ein Werkzeug mittels des Greifers 142 aufzunehmen, indem z.B. ein Werkzeugaufnahme-Schnittstellenmittel bzw. ein standardisierter Werkzeugkegel (z.B. Morsekegel, Steilkegel, oder Hohlschaftkegel), in dem das Werkzeug aufgenommen ist, von dem Greifer 142 aufgenommen bzw. gegriffen wird. Somit entspricht die Werkzeugwechseleinrichtung 140 nach diesem Ausführungsbeispiel der vorliegenden Erfindung einem sog. Einfach-Greifer-Werkzeugwechsler.

Die vorliegende Erfindung ist jedoch nicht auf Werkzeugmaschinen mit derartigen Einfach-Greifer-Werkzeugwechslern begrenzt. Vielmehr ist es ebenso möglich, Ausführungsbeispiele der vorliegenden Erfindung mit anderen Werkzeugwechseleinrichtungen bereitzustellen, z.B. mit sog. Doppel-Greifer-Werkzeugwechslern oder Werkzeugwechseleinrichtungen, die nach dem sogenannten Pick-Up- bzw. Pick-and-Place-Mechanismus funktionieren, bei dem ein Werkzeug aus der Arbeitsspindel der Werkzeugmaschine direkt in ein Werkzeugmagazin und umgekehrt ein- bzw. ausgewechselt werden kann.

Des Weiteren ist es möglich, Ausführungsbeispiele der vorliegenden Erfindung bereitzustellen, bei denen die Werkzeugwechseleinrichtung ein Einfach-, Doppel- oder Mehrfach-Greifer-Werkzeugwechsler ist, der weiterhin dazu geeignet ist, ein in dem Einspannmittel 120 eingespanntes Werkzeug ein- und/oder auszuwechseln, so z.B auch aus der Arbeitsspindel 110 auszuwechseln und in das Einspannmittel 120 einzuwechseln bzw. aus dem Einspannmittel 120 auszuwechseln und in die Arbeitsspindel 110 einzuwechseln, und/oder auch aus einem Werkzeugmagazin zu entnehmen und in ein Werkzeugmagazin zu legen.

Es sind zusätzlich Ausführungsbeispiele der vorliegenden Erfindung möglich, in denen die Werkzeugmaschine dazu eingerichtet das in dem Werkzeugaufnahmemittel der Arbeitsspindel eingespannte Werkstück programmgesteuert umzuspannen, wobei das in dem Werkzeugaufnahmemittel der Arbeitsspindel eingespannte Werkstück vorzugsweise programmgesteuert ausgespannt wird und vorzugsweise in neuer Einspannsituation in das Werkzeugaufnahmemittel der Arbeitsspindel programmgesteuert eingespannt wird. Dies kann ggf. auch durch die Werkzeugwechseleinrichtung dazu geeignet sein, das Umspannen des an der Arbeitsspindel eingespannten Werkstücks auszuführen. Hierzu kann die Werkzeugwechseleinrichtung z.B. ein Doppel-Greifer-Werkzeugwechsler-System sein, bei dem ein erster Greifer das Werkstück aus der Arbeitsspindel aufnimmt bzw. ausspannt, wobei ein zweiter Greifer das Werkstück von dem ersten Greifer aufnimmt und dann in neuer Einspannsituation an der Arbeitsspindel einspannt. So kann ein Werkstück an der Arbeitsspindel umgespannt werden, z.B. um zuerst einer Vorderseiten- und dann einer Rückseitenbearbeitung oder umgekehrt unterzogen zu werden.

Nach den vorstehend beschriebenen Ausführungsbeispielen der vorliegenden Erfindung ist die Werkzeugwechseleinrichtung 140 neben dem Ausführen eines Werkzeugwechsels weiterhin dazu eingerichtet, die Werkstücke an der Arbeitsspindel ein- bzw. auszuspannen. Die Werkzeugmaschine kann jedoch zum Wechseln der Werkstücke auch eine eigens bereitgestellte Werkstückwechseleinrichtung, ggf. auf dem Werkzeugtisch bereitgestellt, umfassen, die dazu geeignet ist, ein Werkstück an der Arbeitsspindel 110 und/oder in dem Einspannmittel 120 programmgesteuert ein- bzw. auszuwechseln, gegebenenfalls auch an der Arbeitsspindel umzuspannen. Eine derartige Werkstückwechseleinrichting kann z.B. als Greifereinrichtung mit einem oder mehreren Greifern zum Greifen eines Werkstücks ausgebildet sein, ggf. in analoger Weise zu den vorstehend beschriebenen Werkzeugwechseleinrichtungen.

Es sind weiterhin Ausführungsbeispiele der vorliegenden Erfindung möglich, in denen das in dem Einspannmittel 120 eingespannte Werkzeug 200 eine Werkzeugvorrichtung ist, die sowohl ein Bearbeitungsmittel zum Bearbeiten eines Werkstücks umfasst, wie z.B. ein Fräs- oder Bohrwerkzeug, und auch ein Antriebsmittel zum Antreiben des Bearbeitungsmittels, z.B. zum rotatorischen Antreiben des Bearbeitungsmittels z.B. des Fräs- oder Bohrwerkzeugs. So können z.B. Komplettwerkzeuge mit integriertem Werkzeugantrieb in dem Einspannmittel 120 der Werkzeugmaschine (100) eingespannt werden.

Im Gegensatz zu den aus dem Stand der Technik bekannten Verfahren zum Bearbeiten eines Werkstücks an einer Werkzeugmaschine ist die Einspannsituation von Werkstück und Werkzeug erfindungsgemäß umgekehrt. Diese erfindungsgemäße Einspannsituation ist in Fig. 1 dargestellt.

Ein Werkstück 300 wird an der Arbeitsspindel 110 eingespannt, die nach dem Stand der Technik konventionell dafür vorgesehen ist, ein Werkzeug aufzunehmen, wobei das Werkzeug 200 erfindungsgemäß in dem Einspannmittel 120 der Werkzeugmaschine 100 eingespannt ist, die nach dem Stand der Technik dafür vorgesehen ist, ein zu bearbeitendes Werkstück einzuspannen.

Speziell ist nach diesem Ausführungsbeispiel der vorliegenden Erfindung das Werkstück 300 derart an der Arbeitsspindel 110 aufgenommen, dass es in einer Einspannspannvorrichtung 400 eingespannt ist, wie in Fig. 1 schematisch dargestellt. Die Einspannvorrichtung 400 ist in dem Werkzeugaufnahmemittel 111 der Arbeitsspindel 110 aufgenommen. Hierzu ist nach diesem Ausführungsbeispiel der vorliegenden Erfindung eine Stirnseite der Einspannvorrichtung mit einem Werkzeugaufnahme-Schnittstellenmittel in der Form einer Stirnseite eines standardisierten Werkzeugkegels (z.B. Morsekegel, Steilkegel, oder Hohlschaftkegel) bereitgestellt bzw. in der Form eines standardisierten Werkzeugkegels (z.B. Morsekegel, Steilkegel, oder Hohlschaftkegel), die es ermöglicht, die Einspannvorrichtung 400 analog zu einem standardisierten Werkzeugkegel an der Arbeitsspindel 110 an dem Werkzeugaufnahmemittel 111 aufzunehmen bzw. einzuspannen.

Des Weiteren ist die Einspannvorrichtung 400 weiterhin nach diesem Ausführungsbeispiel der vorliegenden Erfindung dazu geeignet, von dem Greifer 142 der Greifervorrichtung 141 der Werkzeugwechselvorrichtung 140 aufgenommen zu werden, so dass das an der Arbeitsspindel 110 eingespannte Werkstück 300 mittels der Werkzeugwechseleinrichtung 140 an der Arbeitsspindel 110 ein- bzw. ausgewechselt werden kann.

Als Werkzeug zum Bearbeiten des Werkstücks 300 ist nach diesem Ausführungsbeispiel der vorliegenden Erfindung ein Zahnform-Messerkopf an dem Einspannmittel 120 der Werkzeugmaschine 100 eingespannt, der einen rotationssymmetrischen Grundkörper 200 und eine Mehrzahl an auf dem Grundkörper 200 angeordneten Schneidmessern 201 umfasst, wobei die Schneidmesser 201 dazu geeignet sind, eine Zahnlücke einer Verzahnung auf dem Werkstück 300 zu fräsen. Derartige Zahnform-Messerköpfe sind dem Stand der Technik zur Fertigung von Zahnrädern bekannt und werden konventionell an speziellen Zahnradfräsmaschinen (insbesondere Spezial-Kegelradfräsmaschinen bzw. Spezial-Zahnradwälzfräsmaschinen) genutzt, um Zahnräder zu fertigen, z.B. nach den dem Stand der Technik bekannten Gleason-, Oerlikon- oder Klingelnberg-Verfahren.

Das an der Arbeitsspindel eingespannte Werkstück 300 ist nach diesem Ausführungsbeispiel der vorliegenden Erfindung beispielsweise ein vorbearbeitetes Werkstück 300, das, wie in Fig. 1 beispielhaft gezeigt, das bereits in der Form eines Grundkörpers eines Kegelrades geformt ist. Zum Fertigen eines eine Verzahnung aufweisenden Kegelrades aus dem Werkstück 300 werden das an der Arbeitsspindel eingespannte Werkstück 300 und der in dem Einspannmittel 120 der Werkzeugmaschine 100 eingespannte Zahnform-Messerkopf 200; 201 programmgesteuert relativ zueinander mittels der fünf Achsen der Werkzeugmaschine 100 gesteuert, um mit den Schneidmessern 201 zerspanend eine Verzahnung auf dem Werkstück 300 herauszuarbeiten.

Des Weiteren umfasst die Werkzeugmaschine 100 ein Magazin 150 mit einer Mehrzahl von Fächern 151, 152 und 153 zum Lagern bzw. Aufnehmen von Werkzeugen bzw. Werkstücken. Beispielhaft sind in den Fächern 151 und 152 jeweils die Werkstücke 301 und 302 gelagert. In Fach 153 ist kein Werkstück gelagert. Erfindungsgemäß kann nun das an der Arbeitsspindel 110 eingespannte Werkstück 300 mittels der Werkzeugwechseleinrichtung 140 mit einem der Werkstücke 301 und 302 automatisch und programmgesteuert ausgewechselt werden. Hierzu wird das an der Arbeitsspindel 110 eingespannte Werkstück 300 mittels der Greifervorrichtung 141 aus dem Werkzeugaufnahmemittel 111 der Arbeitsspindel 110 entnommen, indem der Greifer 142 die Einspannvorrichtung 400 aufnimmt bzw. greift, analog zu dem Aufnehmen eines Werkzeugkegels durch den Greifer 142 bei einem konventionellen automatischen Werkzeugwechsel.

Das von dem Greifer 142 aufgenommene Werkstück 300 wird von der Greifervorrichtung 141 der Werkzeugwechseleinrichtung 140 in das freie Fach 153 eingelegt, um dort gelagert zu werden. Dann kann der Greifer 142 eines der Werkstücke 301 und 301 aus dem Magazin 150 entnehmen, um es an der Arbeitsspindel 110 automatisch und programmgesteuert einzuwechseln. Die Werkstücke 301 und 302 werden hierfür in Fächern des Magazins 150 gelagert, ggf. schon eingespannt in Einspannvorrichtungen analog zu der Einspannsituation des Werkstücks 300 in der Einspannvorrichtung 400, so dass der Greifer 142 zum Entnehmen der Werkstücke 301 oder 302 aus dem Magazin 150 die Einspannvorrichtungen analog zu der Einspannvorrichtung 400 aufnehmen kann.

Somit kann an der Werkzeugmaschine 100 ein automatischer Werkstückwechsel ausgeführt werden, bei dem das an der Arbeitsspindel 110 eingespannte Werkstück 300 mit einem anderen Werkstück 301 oder 302 ausgewechselt wird, so dass das eingewechselte Werkstück 301 oder 302 an der Werkzeugmaschine 100 mit dem in dem Einspannmittel 120 eingespannten Werkzeug 200; 201 bearbeitet werden zu können.

Die vorliegende Erfindung stellt somit eine Einspannsituation von Werkstück und Werkzeug bereit, bei der ein automatischer und ggf. programmgesteuerter Werkstückwechsel an einer Werkzeugmaschine durchgeführt werden kann, die dazu geeignet ist, Werkzeuge an der Arbeitsspindel ein- bzw. auszuwechseln, wobei bei dem Werkstückwechsel im Gegensatz zu konventionellen Verfahren ein an der Arbeitsspindel eingespanntes Werkstück aus- bzw. eingewechselt werden kann. Dies ist insbesondere bei Bearbeitungsvorgängen an Werkzeugmaschinen vorteilhaft, bei denen es vorgesehen ist, eine Mehrzahl von Werkstücken an der Werkzeugmaschine zu bearbeiten, z.B. für eine Kleinserienproduktion oder Serienproduktion, bei der eine Mehrzahl von Werkstücken ggf. anhand eines gleichen NC-Programms bearbeitet bzw. gefertigt werden sollen.

Nach der vorliegenden Erfindung können somit eine Mehrzahl von Werkstücken, z.B. Zahnräder, ohne einen erforderlichen manuellen Eingriff aufeinanderfolgend an der Werkzeugmaschine bearbeitet bzw. gefertigt werden, da der Werkstückwechsel automatisch und ggf. programmgesteuert ausgeführt werden kann. Somit kann bei der Bearbeitung von einer Mehrzahl von Werkstücken an der Werkzeugmaschine, z.B. bei der Fertigung von Zahnrädern, eine höhere Effizienz, eine deutliche Zeitersparnis und auch höhere Genauigkeit erreicht werden.

Die vorliegende Erfindung ist nicht auf die vorstehend beschriebenen beispielhaften Ausführungsbeispiele begrenzt. Vielmehr sind des Weiteren Ausführungsbeispiele der vorliegenden Erfindung möglich, die Merkmale der vorstehend beschriebenen Ausführungsbeispiele der vorliegenden Erfindung kombinieren.

## Patentansprüche

1. Verfahren zum programmgesteuerten, zerspanenden Bearbeiten eines Werkstücks (300) an einer zumindest 5 Achsen umfassenden Werkzeugmaschine (100), insbesondere an einer Universal-Fräsmaschine oder einem Bearbeitungszentrum, mit einem Werkzeug (200; 201), wobei die Werkzeugmaschine (100) ein Einspannmittel (120) zum Einspannen eines Werkstücks (300) und eine Arbeitsspindel (110) mit einem Werkzeugaufnahmemittel(111) zum Aufnehmen eines Werkzeugs (300) an der Arbeitsspindel (110) umfasst,
**gekennzeichnet durch**:
- Einspannen des Werkstücks (300) an dem Werkzeugaufnahmemittel (111) der Arbeitsspindel (110) der Werkzeugmaschine (100),
- Einspannen des Werkzeugs (200; 201) an dem Einspannmittel (120) der Werkzeugmaschine (100), und
- programmgesteuertes Steuern des an dem Werkzeugaufnahmemittel (111) der Arbeitsspindel (110) eingespannten Werkstücks (300) relativ zu dem an dem Einspannmittel (120) eingespannten Werkzeug (200; 201) zum Abtragen von Material von dem Werkstück (300).

2. Verfahren nach Anspruch 1, **gekennzeichnet durch** programmgesteuertes Auswechseln eines an dem Werkzeugaufnahmemittel (111) der Arbeitsspindel (110) eingespannten ersten Werkstücks (300) mit einem zweiten Werkstück (301; 302) und/oder programmgesteuertes Umspannen des an dem Werkzeugaufnahmemittel (111) der Arbeitsspindel (110) eingespannten Werkstücks (300), wobei das an dem Werkzeugaufnahmemittel (111) der Arbeitsspindel (110) eingespannte Werkstück (300) programmgesteuert ausgespannt wird und in neuer Einspannsituation an das Werkzeugaufnahmemittel (111) der Arbeitsspindel (110) programmgesteuert eingespannt wird.

3. Verfahren nach Anspruch 2, **dadurch gekennzeichnet, dass** die Werkzeugmaschine (100) eine Werkzeugwechseleinrichtung (140) umfasst, die dazu geeignet ist, ein an dem Werkzeugaufnahmemittel (111) der Arbeitsspindel (110) aufgenommenes Werkzeug (200) programmgesteuert auszuwechseln, wobei das programmgesteuerte Auswechseln des ersten Werkstücks (300) mit dem zweiten Werkstück (301; 302) an der Arbeitsspindel (110) und/oder das programmgesteuerte Umspannen des Werkzeugs (300) an der Arbeitsspindel (110) mittels der Werkzeugwechseleinrichtung (140) ausgeführt wird.

4. Verfahren nach zumindest einem der Ansprüche 1 bis 3, **dadurch gekennzeichnet, dass** das Werkstück (300), das an der Arbeitsspindel (110) aufgenommen ist, in einer Einspannvorrichtung (400) eingespannt ist und derart an dem Werkzeugaufnahmemittel (111) der Arbeitsspindel (110) aufgenommen ist, dass die Einspannvorrichtung (400) in dem Werkzeugaufnahmemittel (111) der Arbeitsspindel (110) aufgenommen ist.

5. Verfahren nach Anspruch 4, **dadurch gekennzeichnet, dass** die Einspannvorrichtung (400) zur Aufnahme in dem Werkzeugaufnahmemittel (111) der Arbeitsspindel (110) ein Werkzeugaufnahme-Schnittstellenmittel aufweist, insbesondere einen Werkzeugkegel.

6. Verfahren nach zumindest einem der Ansprüche 1 bis 5, **dadurch gekennzeichnet, dass** das Werkzeug (200; 201) ein Messerkopf ist, insbesondere ein Zahnform-Messerkopf, der dazu geeignet ist, eine Verzahnung auf dem Werkstück (300) zu fräsen, insbesondere ein Messerkopf (200) mit einer Mehrzahl von Schneidmessern (201), die dazu geeignet sind, eine oder mehrere Zahnlücken einer Verzahnung auf dem Werkstück (300) zu fräsen.

7. Verfahren nach zumindest einem der Ansprüche 1 bis 6, **dadurch gekennzeichnet, dass** das Einspannmittel (120) drehfest auf einem rotatorisch antreibbaren Drehtisch (130) der Werkzeugmaschine (100) befestigt ist und dazu geeignet ist, das Werkzeug (200; 201) einzuspannen, insbesondere drehfest einzuspannen.

8. Verfahren nach zumindest einem der Ansprüche 1 bis 7, **dadurch gekennzeichnet, dass** das Einspannmittel (120) einen NC-Teilapparat umfasst, wobei das Werkzeug (200; 201) an dem NC-Teilapparat eingespannt ist und der NC-Teilapparat dazu geeignet ist, das eingespannte Werkzeug (200; 201) rotatorisch anzutreiben.

9. Werkzeugmaschine, insbesondere Universal-Fräsmaschine oder Bearbeitungszentrum, zum programmgesteuerten, zerspanenden Bearbeiten eines Werkstücks (300) mit einem Werkzeug (200; 201), wobei die Werkzeugmaschine (100) ein Einspannmittel (120) zum Einspannen eines Werkstücks (300), eine Arbeitsspindel (110) mit einem Werkzeugaufnahmemittel (111) zum Aufnehmen eines Werkzeugs (200; 201) und zumindest 5 Achsen umfasst,
**dadurch gekennzeichnet, dass**
das Werkstück (300) an dem Werkzeugaufnahmemittel (111) der Arbeitsspindel (110) eingespannt ist und
das Werkzeug (200; 201) in dem Einspannmittel (120) eingespannt wird,
wobei die Werkzeugmaschine (100) dazu eingerichtet ist, das an dem Werkzeugaufnahmemittel (111) der Arbeitsspindel (110) eingespannte Werkstück (300) relativ zu dem an dem Einspannmittel (120) eingespannten Werkzeug (200; 201) zum Abtragen von Material von dem Werkstück (300) programmgesteuert zu steuern.

10. Werkzeugmaschine nach Anspruch 9, **dadurch gekennzeichnet, dass** die Werkzeugmaschine (100) dazu eingerichtet ist, ein an dem Werkzeugaufnahmemittel (111) der Arbeitsspindel (110) eingespanntes erstes Werkstück (300) mit einem zweiten Werkstück (301; 302) programmgesteuert auszuwechseln und/oder das an dem Werkzeugaufnahmemittel (111) der Arbeitsspindel (110) eingespannte Werkstück (300) programmgesteuert umzuspannen, wobei das an dem Werkzeugaufnahmemittel (111) der Arbeitsspindel (110) eingespannte Werkstück (300) programmgesteuert ausgespannt wird und in neuer Einspannsituation an das Werkzeugaufnahmemittel (111) der Arbeitsspindel (110) programmgesteuert eingespannt wird.

11. Werkzeugmaschine nach Anspruch 10, **gekennzeichnet durch** eine Werkzeugwechseleinrichtung (140), die dazu geeignet ist, ein an dem Werkzeugaufnahmemittel (111) der Arbeitsspindel (110) aufgenommenes Werkzeug (200; 201) programmgesteuert auszuwechseln, wobei die Werkzeugwechseleinrichtung (140) dazu eingerichtet ist, das erste Werkstück (300) mit dem zweiten Werkstück (301; 302) an der Arbeitsspindel (110) programmgesteuert auszuwechseln und/oder das an dem Werkzeugaufnahmemittel (111) der Arbeitsspindel (110) eingespannte Werkstück (300) programmgesteuert umzuspannen.

12. Werkzeugmaschine nach zumindest einem der Ansprüche 9 bis 11, **dadurch gekennzeichnet, dass** das Werkzeugaufnahmemittel (111) der Arbeitsspindel (110) dazu geeignet ist, eine Einspannvorrichtung (400) aufzunehmen, wobei das Werkstück (300) an der Einspannvorrichtung (400) eingespannt ist und derart an dem Werkzeugaufnahmemittel (111) der Arbeitsspindel (110) eingespannt ist, dass die Einspannvorrichtung (400) in dem Werkzeugaufnahmemittel (111) der Arbeitsspindel aufgenommen ist.

13. Werkzeugmaschine nach Anspruch 12, **dadurch gekennzeichnet, dass** die Einspannvorrichtung (400) zur Aufnahme in dem Werkzeugaufnahmemittel (111) der Arbeitsspindel (110) ein Werkzeugaufnahme-Schnittstellenmittel aufweist, insbesondere einen Werkzeugkegel.

14. Werkzeugmaschine nach zumindest einem der Ansprüche 9 bis 13, **dadurch gekennzeichnet, dass** das Einspannmittel (120) drehfest auf einem rotatorisch antreibbaren Drehtisch (130) der Werkzeugmaschine (100) befestigt ist und dazu eingerichtet ist, das Werkzeug (200; 201) einzuspannen, insbesondere drehfest einzuspannen.

15. Werkzeugmaschine nach zumindest einem der Ansprüche 9 bis 14, **dadurch gekennzeichnet, dass** das Einspannmittel (120) einen NC-Teilapparat umfasst, wobei das Werkzeug (200; 201) an dem NC-Teilapparat eingespannt ist und der NC-Teilapparat dazu geeignet ist, das eingespannte Werkzeug (200; 201) rotatorisch anzutreiben.

## Claims

1. A method for machining a workpiece (300) on a machine tool (100) comprising at least 5 axes, in particular a universal milling machine or a machining centre, with a tool (200; 201) under program control, the machine tool (100) comprising a clamping means (120) for clamping a workpiece (300) and a work spindle (110) including a tool holding means (111) for holding a tool (300) on the work spindle (110),
**characterized by**:
- clamping the workpiece (300) onto the tool holding means (111) of the work spindle (110) of the machine tool (100),
- clamping the tool (200; 201) on the clamping means (120) of the machine tool (100), and
- controlling the workpiece (300) clamped on the tool holding means (111) of the work spindle (110) in a program-controlled manner in relation to the tool (200; 201) clamped on the clamping means (120) for removing material from the workpiece (300).

2. The method of claim 1, **characterized by** replacing a first workpiece (300) clamped on the tool holding means (111) of the work spindle (110) in a program-controlled manner with a second workpiece (301; 302), and/or re-clamping the workpiece (300) clamped on the tool holding means (111) of the work spindle (110) in a program-controlled manner, the workpiece (300) clamped on the tool holding means (111) of the work spindle (110) being unclamped under program control and clamped in a new clamping situation on the tool holding means (111) of the work spindle (110) under program control.

3. The method of claim 2, **characterized in that** the machine tool (100) comprises a tool changer (140) which is suited to replace a tool (200) held on the tool holding means (111) of the work spindle (110) in a program-controlled manner, the program-controlled replacement of the first workpiece (300) with the second workpiece (301; 302) being performed on the work spindle (110) and/or the program-controlled re-clamping of the tool (300) on the work spindle (110) being performed by using the tool changer (140).

4. The method of at least one of claims 1 to 3, **characterized in that** the workpiece (300) held on the work spindle (110) is clamped in a clamping means (400) and held such on the tool holding means (111) of the work spindle (110) that the clamping device (400) is held in the tool holding means (111) of the work spindle (110).

5. The method of claim 4, **characterized in that** the clamping means (400) has a tool holding interface means, in particular a tool taper, for reception in the tool holding means (111) of the work spindle (110).

6. The method of at least one of claims 1 to 5, **characterized in that** the tool (200; 201) is a cutter head, in particular a tooth form cutter head, that is suitable for milling a gearing on the workpiece (300), in particular a cutter head (200) including a plurality of cutting edges (201) that are suitable for milling one or more tooth spaces of a gearing on the workpiece (300).

7. The method of at least one of claims 1 to 6, **characterized in that** the clamping means (120) is fixed in a rotationally locked manner on a rotatively drivable turntable (130) of the machine tool (100) and is suitable for clamping the tool (200; 201), particularly in a rotationally locked manner.

8. The method of at least one of claims 1 to 7, **characterized in that** the clamping means (120) comprises an NC indexing head, the tool (200; 201) being clamped to the NC indexing head and the NC indexing head being suitable for rotatively driving the clamped tool (200; 201).

9. A machine tool, in particular a universal milling machine or a machining centre, for machining a workpiece (300) with a tool (200; 201) under program-control, the machine tool (100) comprising a clamping means (120) for clamping a workpiece (300), a work spindle (110) including a tool holding means (111) for holding a tool (200; 201) and at least 5 axes,
**characterized in that**
the workpiece (300) is clamped on the tool holding means (111) of the work spindle (110), and
the tool (200; 201) is clamped on the clamping means (120),
the machine tool (100) being adapted to control the workpiece (300) clamped on the tool holding means (111) of the work spindle (110) in relation to the tool (200; 201) clamped on the clamping means (120) for removing material from the workpiece (300) in a program-controlled manner.

10. The machine tool of claim 9, **characterized in that** the machine tool (100) is adapted to replace a first workpiece (300) claimed on the tool holding means (111) of the work spindle (110) with a second workpiece (301; 302) in a program-controlled manner and/or to re-clamp the workpiece (300) clamped on the tool holding means (111) of the work spindle (110) in a program-controlled manner, the workpiece (300) clamped on the tool holding means (111) of the work spindle (110) being unclamped under program control and clamped in a new clamping situation on the tool holding means (111) of the work spindle (110).

11. The machine tool of claim 10, **characterized by** a tool changer (140) which is suited to replace a tool (200; 201) held on the tool holding means (111) of the work spindle (110) in a program-controlled manner, the tool changer (140) being adapted to replace the first workpiece (300) with the second workpiece (301; 302) on the work spindle (110) under program-control and/or to re-clamp the workpiece (300) clamped on the tool holding means (111) of the work spindle (110) under program control.

12. The machine tool of at least one of claims 9 to 11, **characterized in that** the tool holding means (111) of the work spindle (110) is suitable for holding a clamping device (400), the workpiece (300) being clamped on the clamping device (400) and being clamped on the tool holding means (111) of the work spindle (110) such that the clamping device (400) is held in the tool holding means (111) of the work spindle.

13. The machine tool of claim 12, **characterized in that** the clamping device (400) has a tool holding interface means, in particular a tool taper, for reception in the tool holding means (111) of the work spindle (110).

14. The machine tool of at least one of claims 9 to 13, **characterized in that** the clamping means (120) is fixed in a rotationally locked manner to a rotatively drivable turntable (130) of the machine tool (100) and adapted to clamp the tool (200; 201), particularly in a rotationally locked manner.

15. The machine tool of at least one of claims 9 to 14, **characterized in that** the clamping means (120) comprises an NC indexing head, the tool (200; 201) being clamped on the NC indexing head and the NC indexing head being suitable for rotatively driving the clamped tool (200; 201).

## Revendications

1. Procédé pour usiner par enlèvement de copeaux, sous la commande d'un programme, une pièce (300) sur une machine-outil (100) comportant au moins 5 axes, en particulier sur une fraiseuse universelle ou un centre d'usinage, à l'aide d'un outil (200 ; 201), dans lequel la machine-outil (100) inclut des moyens de serrage (120) pour serrer une pièce (300) et une broche de travail (110) comportant des moyens de réception d'outil (111) pour recevoir une pièce (300) sur la broche de travail (110),
**caractérisé par** les étapes consistant à :
- serrer la pièce (300) sur les moyens de réception (111) de la broche de travail (110) de la machine-outil (100),
- serrer l'outil (200 ; 201) sur les moyens de serrage (120) de la machine-outil (100), et
- commander, par l'intermédiaire d'un programme, la pièce (300) serrée sur les moyens de réception d'outil (111) de la broche de travail (110) par rapport à l'outil (200 ; 201) serré sur les moyens de serrage (120) de manière à retirer de la matière de la pièce (300).

2. Procédé selon la revendication 1, **caractérisé par** le remplacement, sous la commande d'un programme, d'une première pièce (300) serrée sur les moyens de réception d'outil (111) de la broche de travail (110) par une seconde pièce (301 ; 302) et/ou le resserrage, sous la commande d'un programme, de la pièce (300) serrée sur les moyens de réception d'outil (111) de la broche de travail (110), dans lequel la pièce (300) serrée sur les moyens de réception d'outil (111) de la broche de travail (110) est desserrée sous la commande d'un programme et est serrée dans une nouvelle situation de serrage sur les moyens de réception d'outil (111) de la broche de travail (110) sous la commande d'un programme.

3. Procédé selon la revendication 2, **caractérisé en ce que** la machine-outil (100) inclut un changeur d'outil (140) qui est adapté pour remplacer un outil (200) reçu sur les moyens de réception d'outil (111) de la broche de travail (110) sous la commande d'un programme, dans lequel le remplacement de la première pièce (300) par la seconde pièce (301 ; 302) sur la broche de travail (110) sous la commande d'un programme et/ou le resserrage de l'outil (300) sur la broche de travail (110) sous la commande d'un programme, est réalisé au moyen du changeur d'outil (140).

4. Procédé selon au moins une des revendications 1 à 3, **caractérisé en ce que** la pièce (300) qui est reçue sur la broche de travail (110) est serrée dans un dispositif de serrage (400) et est reçue sur les moyens de réception d'outil (111) de la broche de travail (110) de telle sorte que le dispositif de serrage (400) est reçu dans les moyens de réception d'outil (111) de la broche de travail (110).

5. Procédé selon la revendication 4, **caractérisé en ce que** le dispositif de serrage (400) comporte des moyens d'interface de réception d'outil, en particulier un cône d'outil, pour une réception dans les moyens de réception d'outil (111) de la broche de travail (110).

6. Procédé selon au moins une des revendications 1 à 5, **caractérisé en ce que** l'outil (200 ; 201) est un porte-lame, en particulier un porte-lame en forme de dent, qui est adapté pour fraiser une denture sur la pièce (300), en particulier un porte-lame (200) comportant une pluralité de lames tranchantes (201) qui sont adaptées pour fraiser une ou plusieurs entredents d'une denture sur la pièce (300).

7. Procédé selon au moins une des revendications 1 à 6, **caractérisé en ce que** les moyens de serrage (120) sont fixés de manière bloquée en rotation sur une table tournante (130) de la machine-outil (100) pouvant être entraînée en rotation et sont adaptés pour serrer l'outil (200 ; 201), en particulier pour la serrer de manière bloquée en rotation.

8. Procédé selon au moins une des revendications 1 à 7, **caractérisé en ce que** les moyens de serrage (120) incluent un appareil diviseur à commande numérique (CN), dans lequel l'outil (200 ; 201) est serré sur un appareil diviseur à CN et l'appareil diviseur à CN est adapté pour entraîner l'outil serré (200 ; 201) en rotation.

9. Machine-outil, en particulier une fraiseuse universelle ou un centre d'usinage, pour usiner par enlèvement de copeaux, sous la commande d'un programme, une pièce (300) à l'aide d'un outil (200 ; 201), laquelle machine-outil (100) incluant des moyens de serrage (120) pour serrer une pièce (300), une broche de travail (110) comportant des moyens de réception d'outil (111) pour recevoir un outil (200 ; 201) et au moins 5 axes,
**caractérisée en ce que**
la pièce (300) est serrée sur les moyens de réception d'outil (111) de la broche de travail (110) et
l'outil (200 ; 201) est serré dans les moyens de serrage (120),
la machine-outil (100) étant adaptée pour commander, par l'intermédiaire d'un programme, la pièce (300) serrée sur les moyens de réception d'outil (111) de la broche de travail (110) par rapport à l'outil (200 ; 201) serré sur les moyens de serrage (120) de manière à retirer de la matière de la pièce (300).

10. Machine-outil selon la revendication 9, **caractérisée en ce que** la machine-outil (100) est adaptée pour remplacer, sous la commande d'un programme, une première pièce (300) serrée sur les moyens de réception d'outil (111) de la broche de travail (110) par une seconde pièce (301 ; 302) et/ou pour resserrer, sous la commande d'un programme, la pièce (300) serrée sur les moyens de réception d'outil (111) de la broche de travail (110), dans laquelle la pièce (300) serrée sur les moyens de réception d'outil (111) de la broche de travail (110) est desserrée sous la commande d'un programme et est serrée dans une nouvelle situation de serrage sur les moyens de réception d'outil (111) de la broche de travail (110) sous la commande d'un programme.

11. Machine-outil selon la revendication 10, **caractérisée par** un changeur d'outil (140) qui est adapté pour remplacer un outil (200 ; 201) reçu sur les moyens de réception d'outil (111) de la broche de travail (110) sous la commande d'un programme, dans laquelle le changeur d'outil (140) est adapté pour remplacer, sous la commande d'un programme, la première pièce (300) par la seconde pièce (301 ; 302) sur la broche de travail (110) et/ou pour resserrer, sous la commande d'un programme, la pièce (300) serrée sur les moyens de réception d'outil (111) de la broche de travail (110).

12. Machine-outil selon au moins une des revendications 9 à 11, **caractérisée en ce que** les moyens de réception d'outil (111) de la broche de travail (110) sont adaptés pour recevoir un dispositif de serrage (400), dans laquelle la pièce (300) est serrée sur le dispositif de serrage (400) et est serrée sur les moyens de réception d'outil (111) de la broche de travail (110) de telle sorte que le dispositif de serrage (400) est reçu dans les moyens de réception d'outil (111) de la broche de travail.

13. Machine-outil selon la revendication 12, **caractérisée en ce que** le dispositif de serrage (400) comporte des moyens d'interface de réception d'outil, en particulier un cône d'outil, pour une réception dans les moyens de réception d'outil (111) de la broche de travail (110).

14. Machine-outil selon au moins une des revendications 9 à 13, **caractérisée en ce que** les moyens de serrage (120) sont fixés de manière bloquée en rotation sur une table tournante (130) de la machine-outil (100) pouvant être entraînée en rotation et sont adaptés pour serrer l'outil (200 ; 201), en particulier pour le serrer de manière bloquée en rotation.

15. Machine-outil selon au moins une des revendications 9 à 14, **caractérisée en ce que** les moyens de serrage (120) incluent un appareil diviseur à CN, dans laquelle l'outil (200 ; 201) est serré sur l'appareil diviseur à CN et l'appareil diviseur à CN est adapté pour entraîner l'outil serré (200 ; 201) en rotation.
